# EUROPEAN PATENT APPLICATION

(11) **EP 1 473 719 A2**
(43) Date of publication of application: **03.11.2004**
(21) Application number: 04251914.0
(22) Date of filing: 31.03.2004
(51) Int. Cl.: G11B 19/12

(54) **Information reproducing apparatus, information reproducing method and recording medium on which information reproduction processing program is computer-readably recorded**

(30) Priority: 21.04.2003 JP 2003115296
(71) Applicant: Pioneer Corporation, Tokyo-to (JP)
(72) Inventor: Matsuda, Norio c/o Pioneer Corporation, Kawagoe-shi, Saitama-ken (JP)
(74) Representative: Townsend, Victoria Jayne

(57) **Abstract**

An information reproducing apparatus comprises a determination device which determines a type of a loaded recording medium, an information obtaining device which obtains necessary information for reproduction from the recording medium according to the determined type of recording medium and a reproduction control device which exerts control to reproduce recorded information from the recording medium based on the obtained information, and the apparatus prompts a user to select the type of the recording medium in the case where the determination device cannot determine the type of the recordingmediumorthe information obtaining device cannot normally obtain the necessary information for reproduction, and accepts selection of the type of the recording medium from the user, and obtains the necessary information for reproduction from the recording medium according to the selected type of the recording medium.

## Description

### BACKGROUND OF THE INVENTION

### 1. Field of the Invention

The present invention relates to a technical field of an information reproducing apparatus and so on comprising a determination device which determines a type of a loaded recording medium, an information obtaining device which obtains necessary information for reproduction from the recording medium according to the determined type of the recording medium and a reproduction control device which exerts control to reproduce recorded information from the recording medium based on the obtained information.

### 2. Related Art

In recent years, various types of recording media are appearing in the market. For instance, optical disks are divided into types of a CD (Compact Disc) and a DVD (Digital VersatileDisc) according to a difference in recording density. Furthermore, the CDs are divided into the types of a CD-ROM diffused mainly on computer-related use and a CD-DA (Digital Audio) diffused mainly on musical use, and recording forms thereof are divided into the types of a single session and a multisession and the types having a file system and not having it. The optical disks may also be divided into the types of reproduction-only (CD-ROM or DVD-ROM for instance) and reproduction and recording (CD-R or DVD-R for instance).

Even in the case of such different types of optical disks, an information reproducing apparatus in the past can reproduce recorded information with the same reproduction mechanism. Normally, when the optical disk is inserted into such an information reproducing apparatus, the apparatus automatically determines a type of the inserted optical disk, and obtains necessary information for reproduction according to the type so as to reproduce the recorded information from the optical disk.

It is anticipated that the types of the optical disk will increase in future, and the number of automatic determinations made by the information reproducing apparatus and necessary time therefor and also the time for obtaining the necessary information for reproduction will increase in conjunction with it. Therefore, it is required that each automatic determination process of the type of the optical disk should be performed in as short a time as possible and be correct, and various determination methods thereof are proposed. See, for example, US Patent Application Publication No. US 2002/0145962 A1.

As an example thereof, the above Patent Document discloses an optical disk reproducing apparatus capable of determining the type of the CD and the DVD relatively in a short time.

Regarding various determination methods of an information reproducing apparatus in the past, however, it is inevitable to eventually perform an error process in the case where a type of an optical disk cannot be determined (including a retry) because of a blemish or dirt sticking on the optical disk or insertion of a nonstandard optical disk and so on or in the case where the determination of the optical disk is wrong and the necessary information for reproduction cannot be obtained. As it is anticipated that the types of the optical disk will increase in future, the more types of the optical disk it supports, the more frequently such cases will occur.

### SUMMARY OF THE INVENTION

Thus, the present invention is intended to resolve the inconvenience as an issue, and an object thereof is to provide the information reproducing apparatus, information reproducing method and so on capable of reducing the frequency of eventually leading to an error and becoming incapable of the reproduction.

The above obj ect of the present invention can be achieved by an information reproducing apparatus comprising a determination device which determines a type of a loaded recording medium, an information obtaining device which obtains necessary information for reproduction from the recording medium according to the determined type of recording medium, and a reproduction control device which exerts control to reproduce recorded information from the recording medium based on the obtained information, wherein the information reproducing apparatus is provided with: a selection request device which prompts a user to select the type of the recording medium in the case where the determination device cannot determine the type of the recording medium, or in the case where the information obtaining device cannot normally obtain the necessary information for reproduction; and a selection acceptance device which accepts selection of the type of the recording medium from the user, wherein the information obtaining device obtains the necessary information for reproduction from the recording medium according to the selected type of the recording medium.

The above obj ect of the present invention can be achieved by an information reproducing method of an information reproducing apparatus, wherein the information reproducing method is provided with: a process which determines a type of a loaded recording medium; a process which obtains necessary information for reproduction from the recording medium according to the determined type of the recording medium; a process which prompts a user to select a type of the recording medium in the case where the type of the recording medium cannot be determined, or in the case where the necessary information for reproduction cannot be normally obtained; a process which accepts selection of the type of the recording medium from the user; a process which obtains the necessary information for reproduction from the recording medium according to the selected type of the recording medium; and a process which exerts control to reproduce recorded information from the recording medium based on the obtained information.

The above obj ect o f the present invention can be achieved by a recording medium on which an information reproduction processing program is computer-readably recorded, wherein the information reproduction processing program causes a computer included in an information reproducing apparatus to perform the functions of: determining a type of a loaded recording medium; obtaining necessary information for reproduction from the recording medium according to the determined type of the recording medium; prompting a user to select the type of the recording medium in the case where the type of the recording medium cannot be determined, or in the case where the necessary information for reproduction cannot be normally obtained; accepting selection of the type of the recording medium from the user; obtaining the necessary information for reproduction from the recording medium according to the selected type of the recording medium; and exerting control to reproduce recorded information from the recording medium based on the obtained information.

### BRIEF DESCRIPTION OF THE DRAWINGS

FIG. 1 is a diagram showing an overview configuration example of a disk reproducing apparatus;
FIG. 2 is a flowchart showing a process of a system control portion 6 in the case of reproducing an optical disk 10;
FIG. 3 is a flowchart showing the process of a single session shown in a step 13 in FIG. 2; and
FIG. 4 is a flowchart showing the process of a multisession shown in a step 14 in FIG. 2.

### DESCRIPTION OF THE PREFERRED EMBODIMENTS

Next, preferred embodiments of the present invention will be described based on the drawings. The embodiments described below are those in the case of applying the present invention to a disk reproducing apparatus which reproduces information recorded on an optical disk as an example of a recording medium.

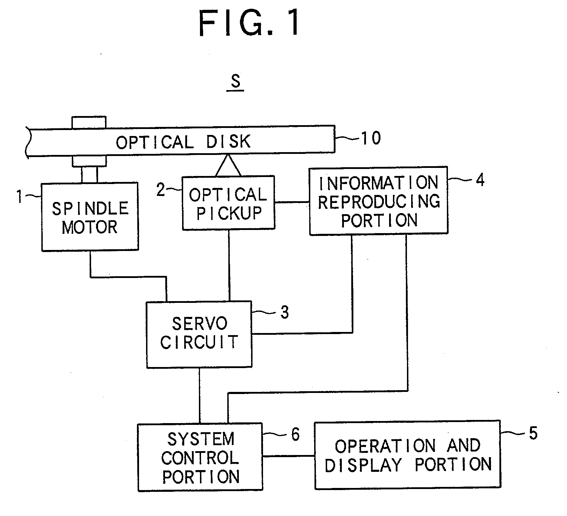

First, a configuration and functions of the disk reproducing apparatus according to this embodiment will be described by referring to FIG. 1.

FIG. 1 is a diagram showing an overview configuration example of the disk reproducing apparatus. As shown in FIG. 1, a disk reproducing apparatus S is comprised of a spindle motor 1, an optical pickup 2, a servo circuit 3, an information reproducing portion 4, operation and display portion 5, a system control portion 6 to control the components and so on. An optical disk 10 is loaded on a tray in an unshown loading mechanism provided to the disk reproducing apparatus S so as to be inserted (carried) into the apparatus S.

The spindle motor 1 rotates the optical disk 10 placed at a predetermined clamp position on an unshown turntable at a fixed linear velocity.

The optical pickup 2 irradiates the optical disk 10 with a light beam by means of an unshown semiconductor laser element and detects reflected light thereof with an optical sensor so as to output a detection signal thereof to the servo circuit 3 and the information reproducing portion 4. The semiconductor laser element is comprised of a DVD laser element which emits the light beam of 650 nm wavelength for a DVD and a CD laser element which emits the light beam of 780 nmwavelength for a CD. These elements emit the light beam with a driving current from an unshown drive circuit controlled by the system control portion 6. The optical pickup 2 also has an actuator comprised of a focusing portion which moves an unshown objective lens in an optical axis direction and a tracking portion which moves the objective lens in a disk radius direction vertical to an optical axis.

Under the control of the system control portion 6, the servo circuit 3 generates a tracking error signal and a focus error signal based on the detection signal outputted from the optical pickup 2. Based on these signals, it exerts servo control over the spindle motor 1 and optical pickup 2, that is, it controls speeds of the optical pickup 2 and optical disk 10, a track position, a focus of a condenser lens and so on by forming a closed circuit loop. The servo circuit 3 also digitizes the generated tracking error signal, and supplies the digitized signal to the system control portion 6.

Under the control of the system control portion 6, the information reproducing portion 4 converts the detection signal outputted from the optical pickup 2 into an RF (Radio Frequency) signal with an RF amplifier and digitizes it, and then performs an EFM (Eight to Fourteen Modulation) demodulation process, an error correction process and so on, so as to restore recorded information (data) of the optical disk 10. And the information reproducing portion 4 decodes the restored recorded information (video data, audio data, a computer program, data and so on) and thereby reproduces the recorded information. Of the reproduced recorded information, the video data is outputted to a display via an unshown drawingprocessing circuit, the audio data is outputted to a speaker via an unshown speech processing circuit, and the computer program and so on are outputted to the system control portion 6.

As for types of the optical disk 10, it is divided into the DVD and CD according to a difference in recording density of the recorded information. And in the case where the optical disk 10 is a CD, it is further divided into the types of a single session and a multisession. To be more specific, as publicly known, the CD has the information recorded thereon in a unit of a session, where one session is comprised of a lead-in area, a program area and a lead-out area in order from an inner circumference side. It is called the multisession in the case where a plurality of such sessions are formed on an information recording surface. Furthermore, as for types of the CD, it is divided into a CD audio (CD-DA) having the audio data and so on recorded thereon and a CD-ROM having the computer program, data and so on recorded thereon. Furthermore, in the case where the CD is the multisession, a public-domain file system (an information source capable of referring to files and directories recorded on the CD-ROM with a logical address (or a virtual address)) exists in a last session. As for the types of the CD, it is divided into the CD having the file system and the CD not having the file system.

In the case where the optical disk 10 is the CD, TOC (Table of Contents) information recorded in the lead-in area of the CD is supplied from the information reproducing portion 4 to the system control portion 6 under the control of the system control portion 6. The TOC information includes track numbers in the program area, absolute time of a starting position and an ending position of the recorded information, whether it is the single session or the multisession, whether it is the CD audio or the CD-ROM and so on.

The operation and display portion 5 comprises an operation instruction button to have various instructions (instructions for reproduction and stop of the optical disk 10, instructions for selection of the type of the optical disk 10 and instructions for selection of a mode, for instance) inputted by a user, and a display panel (a liquid crystal display panel, for instance) to display various kinds of information (a status of the apparatus S, the information on the optical disk 10, information prompting selection of the type of the optical disk 10, for instance). For instance, if the operation instruction button is pressed by the user, an instruction signal corresponding to the pressed operation instruction button is outputted to the system control portion 6.

The system control portion 6 is comprised of a CPU (Central Processing Unit) having a computing function, an ROM (Read-Only Memory) to store various kinds of data and the programs (including an information reproduction processing program: it may be downloaded from a server on the Internet or recorded on the recording medium such as a CD to be provided, for instance), a working RAM (Random-Access Memory), a nonvolatile memory (an EEPROM (Electrically Erasable Programmable Read-Only Memory, for instance) to store and hold various settings and so on. As the CPU executes the programs, the system control portion 6 functions as a determination device, a selection request device, a selection acceptance device, an information obtaining device, a reproduction control device and a mode selection acceptance device.

To be more precise, the system control portion 6 determines the type of the loaded optical disk 10 as a determination device. For instance, the determination of whether it is the CD or the DVD is made based on the tracking error signal supplied from the servo circuit 3. The determinations of whether the CD is the single session or the multisession and whether it is the CD audio or the CD-ROM are made by the system control portion 6 based on the information included in the TOC information.

As an information obtaining device, the system control portion 6 also obtains from the optical disk 10 the necessary information for the reproduction according to the determined type of the optical disk 10. Here, the necessary information for the reproduction, that is, the information necessary to reproduce the recorded information recorded in the program area includes the information recorded in the lead-in area (including the TOC information) for instance in the case of the CD. In the case of the DVD, the necessary information for the reproduction includes minimum read rate information (information to determine a read line speed on the reproduction) in physical format information recorded in the lead-in area and the information in a video manager recorded in the area following the lead-in area, for instance.

In the case where the type of the optical disk 10 cannot be determined or the necessary information for the reproduction cannot be normally obtained, the system control portion 6 also prompts the user to select the type of the optical disk 10, as a selection request device, by displaying it on the display panel of the operation and display portion 5 for instance, and accepts the selection of the type of the optical disk 10 from the user via the operation and display portion 5 as a selection acceptance device. Thus, the user can also select the type of the optical disk 10 determinable by the system control portion 6 (determination device). This is because, under the normal circumstances, the user often knows the type of the optical disk 10 to be reproduced, and so the user can indicate the type of the optical disk 10 to the apparatus S instead of automatic determination by the apparatus S. In this case, the system control portion 6 obtains the necessary information for the reproduction from the optical disk 10 according to the type of the optical disk 10 selected by the user.

And the system control portion 6 exerts control to reproduce the recorded information from the optical disk 10 based on the necessary information for the reproduction as a reproduction control device. In controlling the reproduction of the recorded information, the system control portion 6 performs optimum reproduction settings (adj ustments necessary for the reproduction) according to the type of the optical disk 10 or the necessary information for the reproduction. Here, the reproduction settings mean the settings of various constants, parameters and so on in the spindle motor 1, optical pickup 2, servo circuit 3 and information reproducing portion 4. For instance, they include a focus adjustment, a tracking adjustment, an equalizing coefficient of the RF amplifier, an adjustment coefficient of the tracking error signal according to a difference in a track pitch, a servo gain, a PLL setting, an error correction method and a CD-ROM decoding method.

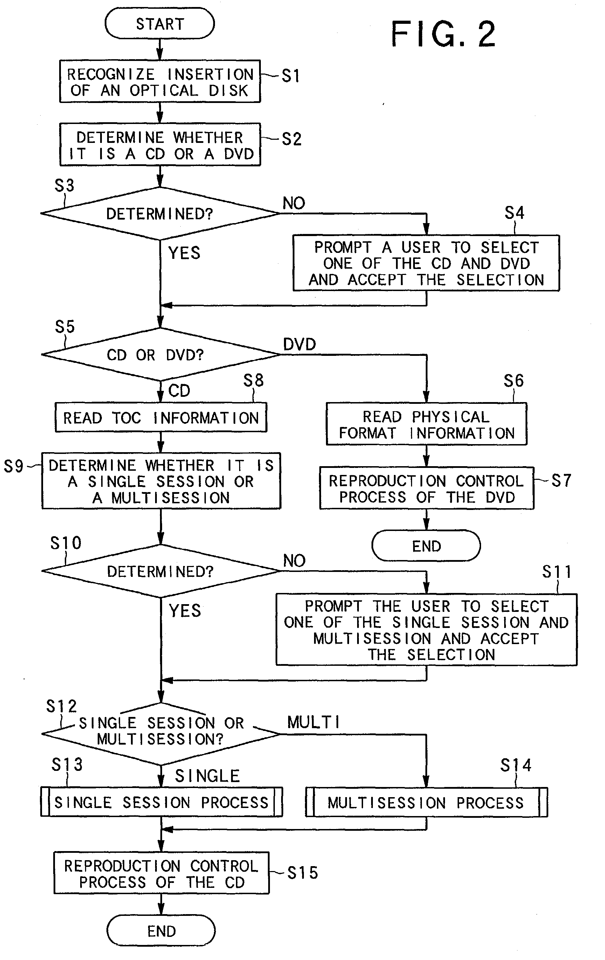

Next, an operation of the disk reproducing apparatus S according to this embodiment will be described by referring to FIGs. 2 to 4. The following operation is an example of the case where the optical disk 10 is reproduced automatically (without waiting for a reproduction instruction from the user) once the optical disk 10 is loaded on a loading mechanism of the disk reproducing apparatus S and inserted therein by the user.

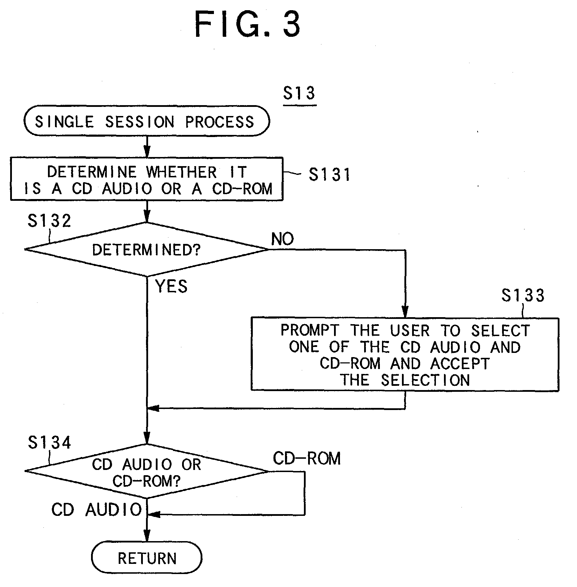

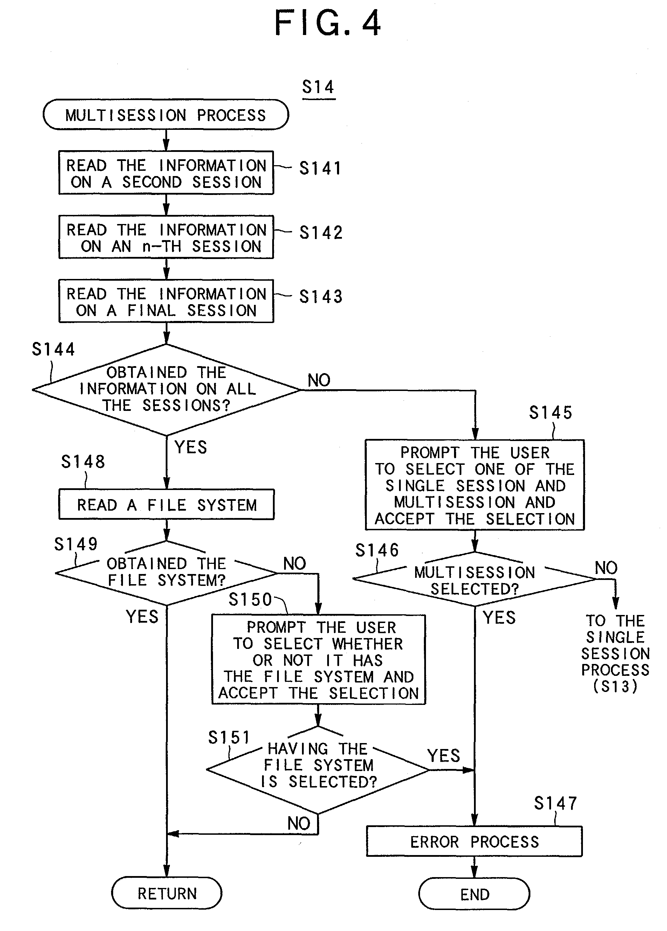

FIG. 2 is a flowchart showing the process of the system control portion 6 in the case where the optical disk 10 is reproduced. FIG. 3 is a flowchart showing the process of the single session in a step S13 in FIG. 2, and FIG. 4 is a flowchart showing the process of the multisession in a step S14 in FIG. 2.

In the process in FIG. 2, first, if the optical disk 10 is loaded on the loading mechanism of the disk reproducing apparatus S and inserted into it by the user, the system control portion 6 recognizes it (step S1), and performs loading control so as to move the optical pickup 2 to a predetermined position (home position).

In the determination process S4, for instance, the system control portion 6 provides a control instruction to the optical pickup 2 and the servo circuit 3 to radially move the light beam from a CD laser element across a track while irradiating the optical disk 10 with it. In the case where the number of the digitized signals (pulses) of the tracking error signals supplied from the servo circuit 3 while traversing the track becomes a defined value or more, the system control portion 6 determines the type of the optical disk 10 to be that of a CD. And in the case where it is below the defined value, the type of the optical disk 10 is determined to be that of a DVD. It is a determination method taking advantage of the fact that, even if an irradiation position of the light beam from a CD laser element traverses the track of the optical disk 10 in the case where the optical disk 10 is a DVD, a fluctuation margin of the tracking error signals is small and there is no fluctuation margin to the predetermined level unlike the case where it is a CD. The method of determining whether it is the CD or the DVD is not limited thereto. But it is also possible to adopt any method such as the one whereby the optical disk 10 is rotated at a defined rotation speed to measure a maximum pit length or a minimum pit length therefrom at the time so as to determine a disk type from the size of the pit length.

Next, the system control portion 6 determines whether or not the type of the optical disk 10 is determined (step S3), and moves on to a step S5 in the case where the type is determined (step S3: Y).

In the case where the type of the optical disk 10 is not determined in the step S2 (step S3:N), the system control portion 6 performs a display which prompts the user to select whether the optical disk 10 is the CD or the DVD on the display panel of the operation and display portion 5, and accepts a selection of one of the CD and the DVD (first selection acceptance) if made accordingly by the user with the operation instruction button of the operation and display portion 5 (step S4). In the case where the type of the optical disk 10 is not determined in the step S2, the system control portion 6 may also retry to determine the type of the optical disk 10 a predetermined number of times, and prompt the user to select the type of the optical disk 10 in the case where it cannot thereby be determined.

Next, from the determination results in the step S4 or the selection acceptance results in the step S5, the system control portion 6 determines whether the loaded optical disk 10 is the CD or the DVD (step S8), and moves on to a step S11 in the case where it is the CD or moves on to a step S9 in the case where it is the DVD.

In the step S9, the system control portion 6 provides the control instruction to the optical pickup 2, the servo circuit 3 and so on to read the physical format information recorded in the lead-in area of the DVD and the video manager recorded in the area following the lead-in area so as to read and obtain the read physical format information and so on as necessary information for the reproduction from the information reproducing portion 4. And the system control portion 6 provides to the optical pickup 2, the servo circuit 3 and information reproducingportion 4 the control instruction for a reproduction control process of the DVD, that is, to reproduce the recorded information from the program area of the DVD based on the necessary information for the reproduction (step S10). Thus, the recorded information is reproduced from the DVD.

In the step S11, the system control portion 6 provides the control instruction to the optical pickup 2, the servo circuit 3 and so on to read the TOC information recorded in the lead-in area of the first session of the CD so as to read and obtain the read TOC information from the information reproducing portion 4.

Next, the system control portion 6 performs the determination (second determination) process to determine whether the optical disk 10 is the single session or the multisession (step S9). In the determination process, the system control portion 6 determines whether it is the single session or the multisession from the information indicating it included in the read TOC information (identified from an address bit in the TOC information, for instance).

Next, the system control portion 6 determines whether or not the type of the optical disk 10 is determined in the step S9 (step S10), and moves on to a step S12 in the case where the type is determined (step S10: Y).

In the case where the type of the optical disk 10 is not determined in the step S9 (step S10:N), the system control portion 6 performs the display which prompts the user to select whether the optical disk 10 is the single session or the multisession on the display panel of the operation and display portion 5, and accepts a selection of one of the single session and the multisession (second selection acceptance) if made accordingly by the user with the operation instruction button of the operation and display portion 5 (step S11). In the case where the type of the optical disk 10 is not determined in the step S9 such as not being able to normally obtain the TOC information, the system control portion 6 may also retry to determine the type of the optical disk 10 a predetermined number of times, and prompt the user to select the type in the case where it cannot thereby be determined.

Next, the system control portion 6 determines whether the loaded optical disk 10 is the single session or the multisession from a determination result in the step S9 or a selection acceptance result in the step S11 (step S12). It moves on to the step S13 (single session process) in the case of the single session, and moves on to the step S14 (multisession process) in the case of the multisession.

Next, in the single session process shown in FIG. 3, the system control portion 6 performs the determination (third determination) process to determine whether the optical disk 10 is the CD audio or the CD-ROM (step S131). In the determination process, the system control portion 6 determines whether it is the CD audio or the CD-ROM from the information indicating it included in the read TOC information (identified from a control bit in the TOC information, for instance).

Next, the system control portion 6 determines whether or not the type of the optical disk 10 is determined in the step S131 (step S132) , and moves on to a step S134 in the case where the type is determined (step S132: Y).

In the case where the type of the optical disk 10 is not determined in the step S131 (step S132: N), the system control portion 6 performs the display which prompts the user to select whether the optical disk 10 is the CD audio or the CD-ROM on the display panel of the operation and display portion 5, and accepts a selection of one of the CD audio and CD-ROM (third selection acceptance) if made accordingly by the user with the operation instruction button of the operation and display portion 5 (step S133). In the case where the type of the optical disk 10 is not determined in the step S131 such as not being able to normally obtain the TOC information, the system control portion 6 may also retry to determine the type of the optical disk 10 a predetermined number of times, and prompt the user to select the type in the case where it cannot thereby be determined.

Next, the system control portion 6 determines whether the loaded optical disk 10 is the CD audio or the CD-ROM according to the determination result in the step S131 or the selection acceptance result in the step S133 (step S134).

Returning to the process in FIG. 2, the system control portion 6 obtains the necessary information for the reproduction from the read TOC information already read, for instance, according to whether it is the CD audio or the CD-ROM, and provides to the optical pickup 2, the servo circuit 3, and the information reproducing portion 4 the control instruction for the reproduction control process of the CD, that is, to reproduce the recorded information from the program area of the CD based on the obtained information (step S15). Thus, the audio data is reproduced from the first track in the case of the CD audio, and the program data and so on are mutely reproduced in the case of the CD-ROM.

In the multisession process shown in FIG. 4, the system control portion 6 obtains a lead time of the next session from the TOC information and provides the control instruction to the optical pickup 2, the servo circuit 3 and so on to read the information recorded in the lead-in area of the second session of the CD so as to read the read information from the information reproducing portion 4 (step S141) and obtain it. Thereafter, the system control portion 6 likewise reads the information recorded in the lead-in areas of all the sessions from the second session through a final session as the necessary information for the reproduction (steps S142 and S143) and obtains it.

And the system control portion 6 determines whether or not the information on all the sessions was normally obtained (step S144). In the case where it is not obtained (step S144: N), the system control portion 6 performs the display which prompts the user to select whether the optical disk 10 is the single session or the multisession on the display panel of the operation and display portion 5, and accepts a selection of one of the single session and the multisession if made accordingly by the user with the operation instruction button of the operation and display portion 5 (step S145). In the case of going through the step S11, that is, in the case where the selection of the multisession is accepted, it may move on to a step S147 without performing the process in the step S145.

To be more specific, the system control portion 6 determined whether it is the single session or the multisession in the process in the step S9. However, it did not obtain the information on all the sessions, and so it makes an inquiry to the user as to whether it is the single session or the multisession in the step S145 considering that the determination may be wrong.

In the case where it is determined that the information on all the sessions was not obtained in the step S144, the system control portion 6 may also retry to obtain (read) the information on the sessions a predetermined number of times, and prompt the user to select the type of the optical disk 10 in the case where it cannot thereby be obtained.

Next, the system control portion 6 determines whether or not the multisession was selected in the step S145 (step S146). In the case where the multisession was selected (step S146: Y) , it performs the error process (step S147). To be more specific, the system control portion 6 performs the error process as an error processing device if the type of the optical disk 10 determined in the step S9 matches with the type of the optical disk 10 selected in the step S145 (the determination and selection are the multisession in this case) in the case where the necessary information for the reproduction cannot be normally obtained in the step S144.

In the case where the single session was selected in the step S145 (step S146: N), the system control portion 6 moves on to the process of the single session shown in FIG. 3. To be more specific, the system control portion 6 returns to a correct processing routine because the determination thereof in the step S9 was wrong.

In the error process in the step S147, the system control portion 6 performs the processes such as displaying the information indicating a determination error or an information reading error of the optical disk 10 on the display panel of the operation and display portion 5 and ejecting the optical disk 10.

In the case where it is determined that the information on all the sessions was obtained in the step S144 (step S144: Y), the system control portion 6 reads a file system in the final session as the necessary information for the reproduction (steps S148). If the file system is normally obtained (step S149: Y) , the system control portion 6 returns to the process shown in FIG. 2, and provides to the optical pickup 2, the servo circuit 3, and the information reproducing portion 4 the control instruction for the reproduction control process of the multisession CD, that is, to reproduce the recorded information from the program area of the CD (step S15). Thus, the file system is read to the system control portion 6.

If it is determined that the file system was not normally obtained in the step S149 (step S149: N) , the system control portion 6 performs the display which prompts the user to select whether or not the optical disk 10 has the file system on the display panel of the operation and display portion 5, and accepts a selection if made accordingly by the user with the operation instruction button of the operation and display portion 5 (step S150). In the case where the file system is not normally obtained in the step S148, the system control portion 6 may also retry to obtain (read) the file system a predetermined number of times, and prompt the user to select the type of the optical disk 10 in the case where it cannot thereby be obtained.

Next, the system control portion 6 determines whether or not having the file system is selected in the step S150 (step S151). In the case where having the file system is selected (step S151: Y) , it performs the error process (step S147). In the case where having no file system is selected (step S151: N), the system control portion 6 recognizes it as the single session CD and returns to the process shown in FIG. 2, and provides to the optical pickup 2, the servo circuit 3, and the information reproducing portion 4 the control instruction for the reproduction control process of the CD, that is, to reproduce the recorded information from the program area of the CD (step S15).

As described above, even in the case where the type of the optical disk cannot be determined or the necessary information for the reproduction cannot be normally obtained because of a blemish or dirt sticking on the optical disk or insertion of a nonstandard optical disk and so on, according to the embodiment, it is possible to have the type of the optical disk 10 selected by the user, to obtain the necessary information for the reproduction according to the selected type, and to have the recorded information reproduced based on it so as to reduce the frequency of eventually leading to the error and becoming incapable of the reproduction. Even in the case where the determination of the type of the optical disk 10 is wrong, it is possible to reproduce the optical disk 10 without eventually leading to the error.

It is also possible to significantly reduce the time from the insertion of the optical disk 10 into the apparatus S to the start of the reproduction thereof if the type of the optical disk 10 is immediately selected by the user without having the system control portion 6 determine the type and retry to obtain the necessary information for the reproduction.

According to the embodiment, the system control portion 6 performs the display which prompts the user to select the type of the optical disk 10 on the display panel of the operation and display portion 5. However, it is not limited thereto, and it may also prompt the user to select it by voice from a speaker for instance.

According to the embodiment, the user selects the type of the optical disk 10 with the operation instruction button of the operation and display portion 5, and the system control portion 6 accepts the selection. However, it is not limited thereto. For instance, the disk reproducing apparatus S may be equipped with a microphone which collects the voice generated by the user and the voice recognition device which recognizes the voice. And if the user is prompted to select the type of the optical disk 10 (by the display or voice) and the user selects the type by uttering the voice ("DVD," "For music (CD audio)," "Single (single session)" and so on) in the steps S5 to S7 in FIG. 2 for instance, themicrophone collects the voice, and the voice recognition device in the system control portion 6 accepts and recognizes the voice so that the system control portion 6 accepts the selection of the type of the optical disk 10.

A publicly known technique may be applied to the voice recognition. For instance, the system control portion 6 may analyze the voice (voice signal) collected at predetermined time intervals to extract a characteristic amount. And it calculates a ratio of matching between the characteristic amount of the voice signal and the data on the characteristic amount of recognized words indicated by HMM (Hidden Markov Models) stored in a database in advance, that is, a probability that the characteristic amount of the voice signal indicates characteristic amount data, and also adds up the probabilities of all the uttered voices so as to confirm the recognized word of the highest added-up probability as a recognition result.

According to such a configuration, the user can select the type of the optical disk 10 without a feelingof strangeness.

The embodiment took classifications of a CD and a DVD, the single session and the multisession, and a CD audio and a CD-ROM as examples of types of the optical disk 10, and described the determination and selection acceptance of these types. However, it is not limited thereto, and it is also possible to take as examples the classifications of reproduction-only optical disks (CD-ROM, DVD-ROM and so on) and reproduction and recording optical disks (CD-R, DVD-R, DVD-RAM, DVD-R/W and so on) or the classification of the DVD and optical disks of a higher density than the DVD so as to perform the determination and selection acceptance of these types. The determination process of the types of the optical disk 10 in the system control portion 6 is not limited to the determination process described in the embodiment, but any other determination process is applicable.

The embodiment described the information reproducing apparatus of the present invention by taking the disk reproducing apparatus as an example. However, it is not limited thereto, and it may also be applied, for instance, to a disk recording and reproducing apparatus which records and reproduces the information on the optical disk.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information reproducing apparatus (S) comprising a determination device (6) which determines a type of a loaded recording medium (10), an information obtaining device (6) which obtains necessary information for reproduction from the recording medium (10) according to the determined type of recording medium (10), and a reproduction control device (6) which exerts control to reproduce recorded information from the recording medium (10) based on the obtained information, **characterized in that** the information reproducing apparatus (S) comprises:
a selection request device (6) which prompts a user to select the type of the recording medium (10) in the case where the determination device (6) cannot determine the type of the recording medium (10), or in the case where the information obtaining device (6) cannot normally obtain the necessary information for reproduction; and
a selection acceptance device (6) which accepts selection of the type of the recording medium (10) from the user,
wherein the information obtaining device (6) obtains the necessary information for reproduction from the recording medium (10) according to the selected type of the recording medium (10).

2. The information reproducing apparatus (S) according to claim 1, **characterized in that** the information reproducing apparatus (S) comprises an error processing device (6) which performs an error process if the type of the determined recording medium (10) matches with the type of the selected recording medium (10) in the case where the information obtaining device (6) cannot normally obtain the necessary information for reproduction.

3. The information reproducing apparatus (S) according to claim 1 or 2, **characterized in that** the determination device (6) performs at least one of a first determination, a second determination, and a third determination, the first determination determining whether the type of the recording medium (10) is a CD or a DVD, the second determination determining whether the type of the recording medium (10) is a single session or amultisession, and the third determination determining whether the type of the recording medium (10) is a CD audio or a CD-ROM, and
the selection acceptance device (6) performs at least one of a first selection acceptance, a second selection acceptance, and a third selection acceptance, the first selection acceptance accepting the selection of whether the type of the recording medium (10) is the CD or the DVD, the second selection acceptance accepting the selection of whether the type of the recording medium (10) is the single session or the multisession, and the third selection acceptance accepting the selection of whether the type of the recording medium (10) is the CD audio or the CD-ROM.

4. The information reproducing apparatus (S) according to any one of claims 1 to 3, **characterized in that** the selection request device (6) prompts the user to select a type of the recording medium (10) by voice.

5. The information reproducing apparatus (S) according to any one of claims 1 to 4, **characterized in that** the selection acceptance device (6) accepts the selection of the type of the recording medium (10) by recognizing the voice uttered by the user.

6. An information reproducing method of an information reproducing apparatus (S), **characterized in that** the information reproducing method comprises:
a process which determines a type of a loaded recording medium (10);
a process which obtains necessary information for reproduction from the recording medium (10) according to the determined type of the recording medium (10);
a process which prompts a user to select a type of the recording medium (10) in the case where the type of the recording medium (10) cannot be determined, or in the case where the necessary information for reproduction cannot be normally obtained;
a process which accepts selection of the type of the recording medium (10) from the user;
a process which obtains the necessary information for reproduction from the recording medium (10) according to the selected type of the recording medium (10); and
a process which exerts control to reproduce recorded information from the recording medium (10) based on the obtained information.

7. A recording medium on which an information reproduction processing program is computer-readably recorded, **characterized in that** the information reproduction processing program causes a computer included in an information reproducing apparatus (S) to perform the functions of:
determining a type of a loaded recording medium (10);
obtaining necessary information for reproduction from the recording medium (10) according to the determined type of the recording medium (10);
prompting a user to select the type of the recording medium (10) in the case where the type of the recording medium (10) cannot be determined, or in the case where the necessary information for reproduction cannot be normally obtained;
accepting selection of the type of the recording medium (10) from the user;
obtaining the necessary information for reproduction from the recording medium (10) according to the selected type of the recording medium (10); and
exerting control to reproduce recorded information from the recording medium (10) based on the obtained information.
